# EUROPÄISCHE PATENTSCHRIFT

(11) **EP 0 740 092 B1**
(45) Veröffentlichungstag und Bekanntmachung des Hinweises auf die Patenterteilung: **22.12.1999**
(21) Anmeldenummer: 96106494.6
(22) Anmeldetag: 25.04.1996
(51) Int. Cl.: F16J 15/08

(54) **Metallische Zylinderkopfdichtung**
Metallic cylinder head gasket
Joint de culasse métallique

(30) Priorität: 26.04.1995 DE 19515329; 02.09.1995 DE 19532498
(43) Veröffentlichungstag der Anmeldung: 30.10.1996
(73) Patentinhaber: Elring Klinger GmbH, 72581 Dettingen (DE)
(72) Erfinder: Böhm, Klaus, 65510 Idstein (DE); Bruckert, Stephan, 61462 Königstein (DE)
(74) Vertreter: Röhl, Wolf Horst, Dipl.-Phys., Dr.

(56) Entgegenhaltungen:
- EP-A- 0 468 526
- EP-A- 0 494 489
- EP-A- 0 533 357
- EP-A- 0 544 951
- US-A- 5 205 566

## Beschreibung

Die Erfindung betrifft eine metallische Zylinderkopfdichtung für eine Zylinderlaufbüchsen aufweisende Brennkraftmaschine, umfassend mindestens ein flaches Deckblech, das mehrere, nebeneinander angeordnete öffnungen entsprechend den Brennkammern der Brennkraftmaschine und jeweils eine um die jeweilige öffnung herum verlaufenden Sicke aufweist, wobei die Sicke zum Öffnungsrand beabstandet angeordnet und ein konzentrisch zur Sicke angeordneter, als Brennraumüberhöhung und als Verformungsbegrenzer für die Sicke dienender, ringförmiger Überhöhungsabschnitt vorgesehen ist, und mindestens ein flaches Trägerblech.

Aus der EP-C-0 306 766 bzw. der EP-C-0 230 804 ist eine derartige metallische Zylinderkopfdichtung für eine Brennkraftmaschine bekannt, bei der ein Trägerblech zusammen mit mindestens einem gesickten Deckblech als Funktionsblech vorgesehen sind. Da sich der Dichtspalt zwischen Zylinderkopf und -block einer Brennkraftmaschine im Betrieb in Abhängigkeit vom Arbeitstakt des jeweils betrachteten Zylinders ändert, ist die Dichtung ständigen Pressungsänderungen unterworfen und muß zur Aufrechterhaltung einer einwandfreien Abdichtung dauerhafte Federungseigenschaften aufweisen.

Die Abdichtung wird hierbei durch eine Überhöhung der Zylinderkopfdichtung entlang des Brennraums und durch eine dahinter liegende Sicke vorgenommen. Letztere wirkt als Federelement und folgt infolge des Zünddrucks auftretenden vertikalen Relativbewegungen des Zylinderkopfs gegenüber dem Zylinderblock. Einerseits darf bei maximal belasteter Sikke keine unzulässig große Verformung auftreten, andererseits darf die Entlastung nicht vollständig, sondern nur soweit erfolgen, daß eine Mindestverformung beim höchsten auftretenden Brennraumdruck die erforderliche Abdichtung sicherstellt. Zwischen diesen beiden Eckpunkten der Verformung liegt der Arbeitsbereich der Sicke.

Um die Funktion der Sicke sicherzustellen, darf die Sicke also weder beim Einbau der Dichtung, noch im Betriebszustand vollständig verformt werden. Eine unzulässig große Verformung der Sicke vertikal zur Dichtungsebene wird bei den bekannten Dichtungen durch einen Verformungsbegrenzer gleichbleibender Stärke verhindert, der zugleich zur Überhöhung der Dichtung entlang des Brennraums dient.

Für Brennkraftmaschinen mit Zylinderlaufbüchsen sind derartige Dichtungen jedoch nicht geeignet, da die Einleitung der Vertikalkräfte, die beim Einspannen der bzw. eingespannter Dichtung auftreten, am Brennraumrand und damit im wesentlichen in die Zylinderlaufbüchse erfolgt, so daß Kippmomente auftreten. Dies trifft insbesondere dann zu, wenn ein geringer Bohrungsabstand zwischen benachbarten Zylinderbohrungen vorliegt.

Aufgabe der Erfindung ist es, eine Zylinderkopfdichtung nach dem Oberbegriff des Anspruchs 1 zu schaffen, die sich für Brennkraftmaschinen mit Zylinderlaufbüchsen eignet.

Diese Aufgabe wird dadurch gelöst, daß die jeweiligen Überhöhungsabschnitte, die durch Ringe und das mindestens eine Trägerblech gebildet werden, auf der der zugehörigen öffnung abgewandten Seite der jeweiligen Sicke derart angebracht sind, daß sie sich auf den Büchsenbünden abstützen.

Hierdurch wird erreicht, daß Vertikalkräfte, die bei zwischen Zylinderkopf und -block eingespannter Dichtung auftreten, über die Büchsenbünde in den Zylinderblock ohne Auftreten eines zusätzlichen Kippmomentes eingeleitet werden.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen (im nicht eingespannten Zustand dargestellt) näher erläutert.

Fig. 1 zeigt schematisch eine Draufsicht auf eine Zylinderkopfdichtung einer ersten Ausführungsform.

Fig. 2 zeigt einen Schnitt längs der Linie I-I von Fig. 1 mit darunter befindlichem Zylinderblock.

Fig. 3 zeigt schematisch eine Draufsicht auf eine Zylinderkopfdichtung einer zweiten Ausführungsform.

Fig. 4 bis 8 zeigen im Schnitt weitere Ausführungsformen von Zylinderkopfdichtungen entsprechend der Schnittlinie II-II von Fig. 1.

Fig. 9 und 10 zeigen im Schnitt zwei Ausführungsformen einer Zylinderkopfdichtung in Anwendung bei einer Brennkraftmaschine, die Zylinderlaufbüchsen mit Unterstand aufweist.

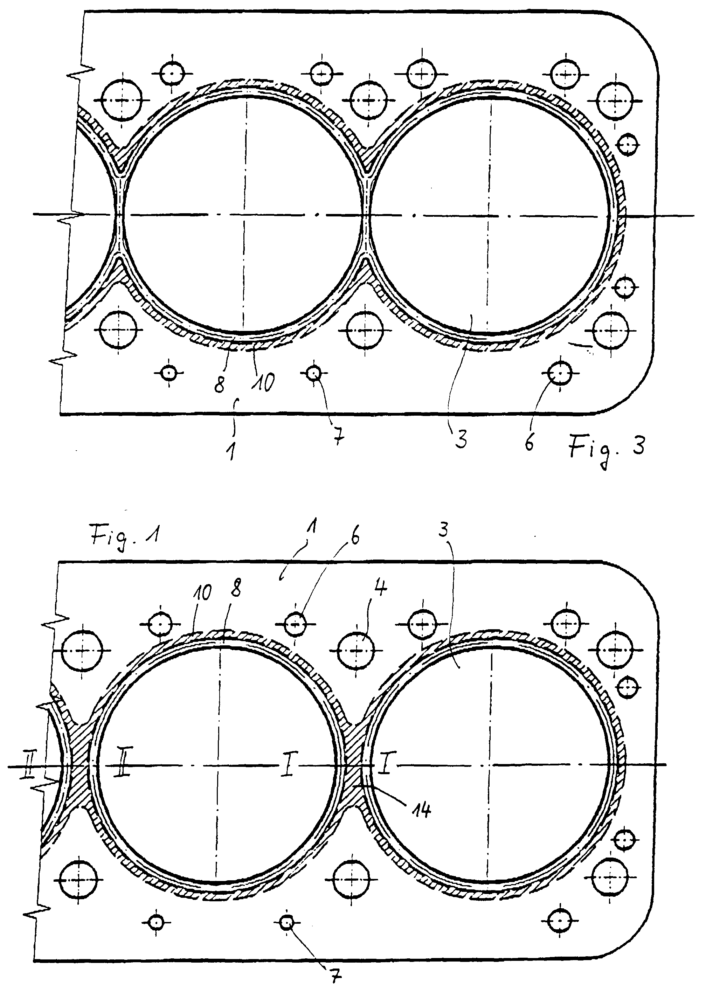

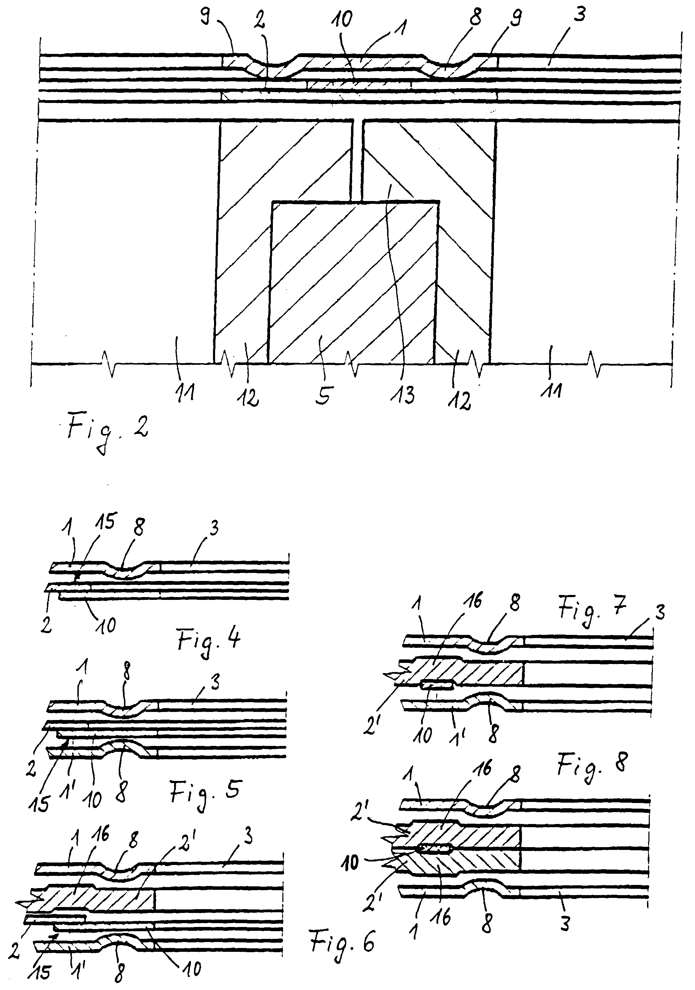

Die in Fig. 1 und 2 dargestellte mehrlagige Zylinderkopfdichtung umfaßt ein Deckblech 1 als Funktionslage sowie ein Trägerblech 2. Die Dichtung, d.h. das Deckblech 1 und das Trägerblech 2, ist mit in einer Reihe nebeneinander angeordneten öffnungen 3 entsprechend den Brennräumen der zugehörigen Brennkraftmaschine sowie Schraubendurchtrittslöchern 4 für Schrauben, die zum Verspannen von Zylinderkopf und -block 5 verwendet werden, und ferner mit Durchtrittsöffnungen 6, 7 für Kühlwasser bzw. Öl versehen.

Das üblicherweise aus Federstahl hergestellte und ansonsten plane Deckblech 1 ist mit (Voll-)Sicken 8 versehen, die mit Abstand unter Belassung eines geraden Blechabschnitts 9 im Randbereich der jeweiligen öffnung 3 angeordnet und zum Trägerblech 2 gerichtet sind.

Ferner sind üblicherweise um die Durchtrittsöffnungen 6, 7 und um die Schraubendurchtrittslöcher 4 herum nicht dargestellte Halbsicken in dem Deckblech 1 vorgesehen.

Auf dem planen Trägerblech 2 sind Ringe 10 konzentrisch zu den öffnungen 3 und damit auch zu den Sicken 8 auf der den öffnungen 3 abgewandten Seiten der Sicken 8 angeordnet, wobei die Ringe 10 einstückig zu einer brillenartigen Einheit miteinander verbunden sind.

Der Zylinderblock 5 besitzt Zylinderbohrungen 11, in die Zylinderlaufbüchsen 12 eingesetzt sind, die zum Zylinderkopf hin jeweils mit einem Büchsenbund 13 versehen sind.

Die Ringe 10 sind derart angeordnet, daß sie sich auf den Büchsenbünden 13 abstützen und somit die Vertikalkräfte, die bei zwischen Zylinderkopf und -block 5 eingespannter Dichtung auftreten, über die Büchsenbünde 13 in den Zylinderblock 5 ohne Auftreten eines zusätzlichen Kippmomentes einleiten. Die Ringe 10 dienen dabei zur Brennraumüberhöhung zur gezielten Aufbringung der Dichtkräfte und als Verformungsbegrenzer für die Sicken 8 und damit zur Begrenzung des Sickenfederwegs.

Bei der in den Fig. 1 und 2 dargestellten Ausführungsform weisen jeweils zwei benachbarte der einstückig miteinander verbundenen Ringe 10 einen gemeinsamen Steg 14 auf, der sich zwischen den beiden benachbarten Sicken 8, die benachbarte öffnungen 3 umgeben, befindet.

Bei der in Fig. 3 dargestellten Ausführungsform sind die Zylinderbohrungen sehr eng zueinander angeordnet, wobei der gemeinsame Steg 14 der Ringe 10 der vorher beschriebenen Ausführungsform fehlt, so daß dort die Überhöhung entfällt, und die Sicken 8 im Bereich zwischen zwei benachbarten öffnungen 3 zu einer einzigen miteinander vereinigt sind.

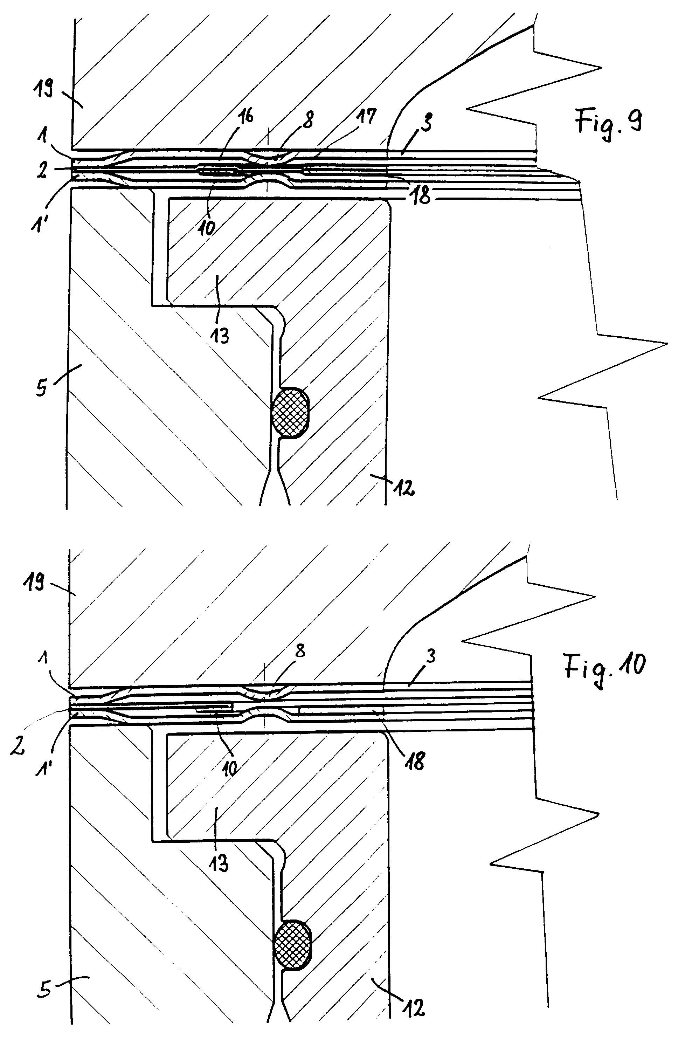

Bei der in Fig. 4 gezeigten Ausführungsform befinden sich die Ringe 10 auf der Seite des Trägerblechs 2, die dem Deckblech 1 abgewandt ist. Die Öffnung 3 ist dabei im Bereich des Trägerblechs 2 soweit vergrößert, daß letzteres nur bis etwa zur Außenseite der Sicke 8 (bezüglich der Öffnung 3 gesehen) reicht, während der Ring 10 am Rand der Öffnung 3 etwa bündig mit dem Deckblech 1 verläuft und ansonsten das Trägerblech 2 in einem überlappungsbereich 15 überlappt, so daß dort eine Verdickung gebildet wird, die sich auf der Außenseite der Sicke 8 befindet und zur Brennraumüberhöhung zur gezielten Aufbringung der Dichtkräfte und als Verformungsbegrenzer für die Sicken 8 und damit zur Begrenzung des Sickenfederwegs dient. Im eingespannten Zustand der Dichtung stützt sich die Sicke 8 auf dem Ring 10 ab und ist infolge des Trägerblechs 2 nur beschränkt verformbar und nicht platt drückbar.

Trägerblech 2 und Ring 8 besitzen zweckmäßigerweise etwa gleiche Stärke.

Bei der in Fig. 5 dargestellten Ausführungsform ist ein zusätzliches, gesicktes Deckblech 1' spiegelsymmetrisch zum Deckblech 1 ausgebildet und angeordnet vorgesehen.

Um hierbei eine symmetrische Anordnung des Überlappungsbereichs 15 zwischen den Deckblechen 1, 1' zu erreichen, kann der Ring 10 gekröpft sein.

Bei der in Fig. 6 dargestellten Ausführungsform ist zusätzlich ein weiteres dickeres Trägerblech 2' vorgesehen, das zweckmäßigerweise im Bereich des Überlappungsbereichs 15 einen durch zwei konzentrische Kröpfungen gebildeten, bezüglich der Ebene des Trägerblechs 2' um etwa die Stärke des Trägerblechs 2 versetzten Ringabschnitt 16 aufweist, um beim Einspannen der Dichtung das Trägerblech 2 im Überlappungsbereich 15 in etwa aufnehmen zu können. Hierbei wird die Sicke 8 des Deckblechs 1 durch den Ringabschnitt 16 und die Sicke 8 des Deckblechs 1' durch den Überlappungsbereich 15 gegen übermäßige Verformung geschützt.

Bei der in Fig. 7 dargestellten Ausführungsform wird der Ring 10 von dem Ringabschnitt 16 des Trägerblechs 2' (das Trägerblech 2 ist hier nicht vorhanden) teilweise aufgenommen, so daß hierdurch das Trägerblech 2' mit dem Ring 10 eine nach beiden Seiten des Trägerblechs 2' vorstehende Erhöhung aufweist, durch die die Brennraumüberhöhung und der Sickenschutz auf der der Öffnung 3 abgewandten Seite der Sicken 8 erfolgt.

Bei der in Fig. 8 dargestellten Ausführungsform sind zwei spiegelsymmetrisch angeordnete Trägerbleche 2' mit ebenfalls spiegelsymmetrischen Ringabschnitten 16 vorgesehen, die zwischen sich den Ring 10 aufnehmen, so daß hierdurch eine nach beiden Seiten des Trägerblechs 2' vorstehende Erhöhung entsteht, durch die die Brennraumüberhöhung und der Sickenschutz auf der der Öffnung 3 abgewandten Seite der Sicken 8 erfolgt.

Bei den Fig. 6 bis 8 bilden die Ringabschnitte 16 entsprechend dem Zylinderbohrungsabstand ebenso wie die Ringe 10 gegebenenfalls auch eine etwa brillenartige Konfiguration mit oder ohne Stege 14.

Die Ringe 10 werden zweckmäßigerweise an den Trägerblechen 2 bzw. 2' beispielsweise durch Schweißen oder Kleben befestigt.

Die einzelnen Bleche der Dichtung können gegebenenfalls mit einem teil- oder ganzflächigen Elastomer- oder einer weicheren Metallüberzug versehen sein.

Die in Fig. 9 dargestellte Ausführungsform der Zylinderkopfdichtung entspricht im wesentlichen derjenigen von Fig. 7, wobei das Trägerblech 2 dünner und benachbart zur jeweiligen öffnung 3 mit einer zusätzlichen Kröpfung 17 versehen ist, wobei in dem abgekröpften, die öffnung 3 umgebenden Bereich des Trägerblechs 2 eine Ringeinlage 18 eingelegt ist. Die hierdurch bewirkte Verdickung ist höchstens in ihrer Dicke gleich derjenigen des durch den Ring 10 und das Trägerblech 2 gebildeten Überhöhungsabschnitts und dient dazu, Ablagerungen von Verbrennungsrückständen im Bereich benachbart zur Öffnung 3 zu verhindern und ein korrektes Einfedern der Sicken 8 beim Verspannen von Zylinderblock 5 und Zylinderkopf 19 zu bewirken. Jedoch erfolgt die Einleitung von Vertikalkräften, die bei zwischen Zylinderkopf und -block 5, 19 eingespannter Dichtung auftreten, über die Büchsenbünde 13 in den Zylinderblock 5 ohne Auftreten eines zusätzlichen Kippmomentes. Die Dicke des Überhöhungsabschnittes ist derart gewählt, daß sie einen Über- oder Unterstand (letzteres dargestellt) der Büchsenbünde 13 der Zylinderbüchsen 12 zusätzlich ausgleicht.

Bei der in Fig. 10 dargestellten Ausführungsform wird der jeweilige Ring 10 durch den umgefalzten (und gegebenenfalls gekröpften) Rand des Trägerblechs 2 gebildet, das somit bezüglich der jeweiligen Öffnung 3 auf der Außenseite der Sicken 8 endet. Brennraumseitig ist benachbart zu den Sicken 8 jeweils die Ringeinlage 18 zum gleichen Zweck wie bei der Ausführungsform von Fig. 9 eingelegt.

## Patentansprüche

1. Metallische Zylinderkopfdichtung für eine Zylinderlaufbüchsen (12) aufweisende Brennkraftmaschine, umfassend mindestens ein flaches Deckblech (1, 1'), das mehrere, nebeneinander angeordnete Öffnungen (3) entsprechend den Brennkammern der Brennkraftmaschine und jeweils eine um die jeweilige Öffnung (3) herum verlaufenden Sicke (8) aufweist, wobei die Sicke (8) zum öffnungsrand beabstandet angeordnet und ein konzentrisch zur Sicke (8) angeordneter, als Brennraumüberhöhung und als Verformungsbegrenzer für die Sicke (8) dienender, ringförmiger Überhöhungsabschnitt vorgesehen ist, und mindestens ein flaches Trägerblech (2, 2'), dadurch **gekennzeichnet**, daß die jeweiligen Überhöhungsabschnitte, die durch Ringe (10) und das mindestens eine Trägerblech (2, 2') gebildet werden, auf der der zugehörigen Öffnung (3) abgewandten Seite der jeweiligen Sicke (8) derart angebracht sind, daß sie sich auf den Zylinderlaufbüchsenbünden (13) abstützen.

2. Dichtung nach Anspruch 1, dadurch gekennzeichnet, daß die Ringe (10) einstückig brillenartig miteinander verbunden sind.

3. Dichtung nach Anspruch 2, dadurch gekennzeichnet, daß zwei benachbarte Ringe (10) im Bereich zwischen den benachbarten Öffnungen (3) einen gemeinsamen Steg aufweisen.

4. Dichtung nach Anspruch 2, dadurch gekennzeichnet, daß zwei benachbarte Ringe (10) im Bereich zwischen den benachbarten öffnungen (3) steglos sind.

5. Dichtung nach einem der Ansprüche 1 bis 4, dadurch gekennzeichnet, daß das Trägerblech (2) im Bereich der Öffnungen (3) einen öffnungsdurchmesser mindestens gleich dem Außendurchmesser der Sicke (8) aufweist, wobei der Ring (10) überlappend mit dem Trägerblech (2) angeordnet ist und mit dem Öffnungsrand des Deckblechs (1) praktisch bündig verläuft.

6. Dichtung nach Anspruch 5, dadurch gekennzeichnet, daß der Ring (10) gekröpft ist.

7. Dichtung nach einem der Ansprüche 1 bis 5, dadurch gekennzeichnet, daß ein Trägerblech (2') mit zur Trägerblechebene versetzten Ringabschnitten (16) zwischen den Überhöhungsabschnitten und dem Deckblech (1) angeordnet ist, wobei die Ringabschnitte (16) teilweise die Überhöhungsabschnitte aufnehmen.

8. Dichtung nach Anspruch 7, dadurch gekennzeichnet, daß die Überhöhungsabschnitte durch die Ringabschnitte (16) und die Ringe (10) gebildet werden.

9. Dichtung nach Anspruch 8, dadurch gekennzeichnet, daß die Überhöhungsabschnitte durch die Ringabschnitte (16), die Ringe (10) und ein Trägerblech (2), das im Bereich der öffnungen (3) einen Öffnungsdurchmesser mindestens gleich dem Außendurchmesser der Sicke (8) aufweist, wobei die Ringe (10) überlappend mit dem Trägerblech (2) angeordnet sind und mit dem öffnungsrand des Deckblechs (1) praktisch bündig verlaufen, gebildet wird.

10. Dichtung nach Anspruch 8, dadurch gekennzeichnet, daß zwei mit Ringabschnitten (16) versehene, spiegelsymmetrische Trägerbleche (2') vorgesehen sind, wobei die Ringe (10) zwischen diesen aufgenommen sind.

11. Dichtung nach einem der Ansprüche 1 bis 10, dadurch gekennzeichnet, daß die Ringe (10) durch Umfalzen des mindestens einen Trägerblechs (2) gebildet sind.

12. Dichtung nach einem der Ansprüche 1 bis 11, dadurch gekennzeichnet, daß benachbart zur jeweiligen Öffnung (3) eine Ringeinlage (18) angeordnet ist, deren Stärke, gegebenenfalls zusammen mit der Stärke des mindestens einen Trägerblechs (2), höchstens der Stärke der Überhöhungsabschnitte entspricht.

## Claims

1. Metallic cylinder-head gasket for an internal combustion engine having a cylinder liner (12) and comprising at least one flat cover plate (1, 1'), which has several apertures (3) which are disposed side by side and correspond to the combustion chambers of the internal combustion engine, and a bead (8) respectively running round each aperture (3), in which the bead (8) is disposed at a distance from the edge of the aperture and an annular superelevation portion is provided which is disposed concentrically with the bead (8) and serves as a combustion chamber superelevation and deformation limiter for the bead (8), and at least one flat supporting plate (2, 2'), **characterized** in that the respective superelevation portions, which are formed by rings (10) and by the supporting plate (2, 2'), of which there is at least one, are provided on the side of the respective bead (8) away from the associated aperture (3) in such a way that they rest on the shoulders (13) of the cylinder liner.

2. Gasket according to Claim 1, characterized in that the rings (10) are joined together in one piece in the form of a pair of spectacles.

3. Gasket according to Claim 2, characterized in that two adjacent rings (10) have a common bridge in the region between the adjacent apertures (3).

4. Gasket according to Claim 2, characterized in that two adjacent rings (10) have no bridge in the region between the adjacent apertures (3).

5. Gasket according to one of Claims 1 to 4, characterized in that the supporting plate (2), in the region of the apertures (3), has an aperture diameter which is at least equal to the external diameter of the bead (8), the ring (10) being disposed so as to overlap with the supporting plate (2) and running practically flush with the aperture edge of the cover plate (1).

6. Gasket according to Claim 5, characterized in that the ring (10) is offset.

7. Gasket according to one of Claims 1 to 5, characterized in that a supporting plate (2'), with annular portions (16) offset in relation to the plane of the supporting plate, is disposed between the superelevation portions and the cover plate (1), the annular portions (16) partly accommodating the superelevation portions.

8. Gasket according to Claim 7, characterized in that the superelevation portions are formed by the annular portions (16) and the rings (10).

9. Gasket according to Claim 8, characterized in that the superelevation portions are formed by the annular portions (16), the rings (10) and a supporting plate (2), which, in the region of the apertures (3), has an aperture diameter which is at least equal to the external diameter of the bead (8), the rings (10) being disposed so as to overlap with the supporting plate (2) and running practically flush with the aperture edge of the cover plate (1).

10. Gasket according to Claim 8, characterized in that two supporting plates having mirror symmetry and being equipped with annular portions (16) are provided, the rings (10) being accommodated between these.

11. Gasket according to one of Claims 1 to 10, characterized in that the rings (10) are formed by a crimping over of the supporting plate (2) of which there is at least one.

12. Gasket according to one of Claims 1 to 11, characterized in that, adjacent to each aperture (3), an annular insert (18) is disposed, its thickness, possibly together with the thickness of the supporting plate (2), of which there is at least one, correponding at most to the thickness of the superelevation portions.

## Revendications

1. Joint de culasse métallique pour un moteur à combustion interne possédant des chemises de cylindres (12), comprenant au moins une tôle de recouvrement plate (1, 1') qui présente plusieurs ouvertures (3) disposées l'une à côté de l'autre d'une façon qui correspond aux chambres de combustion du moteur à combustion interne et une moulure (8) s'étendant sur le tour de chaque ouverture (3), la moulure (8) étant disposée à distance du bord de l'ouverture et un segment de surélévation annulaire étant prévu, disposé concentriquement à la moulure (8) et servant de surélévation de la chambre de combustion et de limiteur de déformation pour la moulure (8), et une ou des tôle(s) support(s) plate(s) (2, 2'), caractérisé en ce que les segments de surélévation, qui sont formés par des anneaux (10) et par la ou les tôle(s) support(s) (2, 2'), sont disposés sur le côté de la moulure (8) correspondante qui est éloigné de l'ouverture (3) correspondante de manière à prendre appui sur les collerettes (13) des chemises.

2. Joint selon la revendication 1, caractérisé en ce que les anneaux (10) sont réunis entre eux en une seule pièce, à la façon de lunettes.

3. Joint selon la revendication 2, caractérisé en ce que deux anneaux (10) adjacents présentent un isthme commun dans la région située entre les ouvertures (3) adjacentes.

4. Joint selon la revendication 2, caractérisé en ce que deux anneaux (10) adjacents sont dépourvus d'isthme dans la région entre les ouvertures (3) adjacentes.

5. Joint selon l'une des revendications 1 à 4, caractérisé en ce que la tôle support (2) présente dans la région des ouvertures (3) un diamètre d'ouverture au moins égal au diamètre extérieur de la moulure (8), l'anneau (10) étant disposé à recouvrement par rapport à la tôle support (2) et s'étendant pratiquement à l'affleurement du bord de l'ouverture de la tôle de recouvrement (1).

6. Joint selon la revendication 5, caractérisé en ce que l'anneau (10) est ondulé.

7. Joint selon l'une des revendications 1 à 5, caractérisé en ce qu'une tôle support (2') possédant des segments annulaires (16) décalés par rapport au plan de la tôle support est disposée entre les segments de surélévation et la tôle de recouvrement (1), les segments annulaires (16) recevant partiellement les segments de surélévation.

8. Joint selon la revendication 7, caractérisé en ce que les segments de surélévation sont formés par les segments annulaires (16) et par les anneaux (10).

9. Joint selon la revendication 8, caractérisé en ce que les segments de surélévation sont formés par les segments annulaires (16), les anneaux (10) et une tôle support (2) qui présente dans la région des ouvertures (3), un diamètre d'ouverture au moins égal au diamètre extérieur de la moulure (8), les anneaux (10) étant disposés à recouvrement par rapport à la tôle support (2) et s'étendant pratiquement à l'affleurement du bord de l'ouverture de la tôle de recouvrement (1).

10. Joint selon la revendication 8, caractérisé en ce qu'il est prévu deux tôles supports (2') munies de segments annulaires (16), et symétriques de façon réfléchie, les anneaux (10) étant logés entre ces tôles.

11. Joint selon l'une des revendications 1 à 10, caractérisé en ce que les anneaux (10) sont formés par repliage de la ou les tôle(s) support(s) (2).

12. Joint selon l'une des revendications 1 à 11, caractérisé en ce que, dans une position adjacente à chaque ouverture (3), est disposée une insertion annulaire (18) dont l'épaisseur, éventuellement avec l'épaisseur de la ou les tôle(s) support(s) (2), correspond au maximum à l'épaisseur des segments de surélévation.
